# EUROPEAN PATENT SPECIFICATION

(11) **EP 3 621 424 B1**
(45) Date of publication and mention of the grant of the patent: **17.11.2021**
(21) Application number: 18725446.1
(22) Date of filing: 09.05.2018
(51) Int. Cl.: A01B 59/00

(54) **AN AGRICULTURAL TRACTOR HAVING AN IMPLEMENT LINKAGE**
LANDWIRTSCHAFTLICHER TRAKTOR MIT ARBEITSGERÄTEKUPPLUNG
TRACTEUR AGRICOLE POURVU D'UN ATTELAGE CÔTÉ OUTIL

(30) Priority: 09.05.2017 EP 17290058
(43) Date of publication of application: 18.03.2020
(73) Proprietor: AGCO International GmbH, 8212 Neuhausen am Rheinfall (CH)
(72) Inventor: FRANCOIS, Quoniam, 60026 Beauvais (FR); EVRARD, Noemie, 60026 Beauvais (FR)
(74) Representative: AGCO Intellectual Property Department
(86) International application number: PCT/EP2018/062034
(87) International publication number: WO 2018/206659

(56) References cited:
- EP-A1- 1 795 060
- EP-A1- 2 870 844
- DE-A1- 2 453 161
- KR-A- 100 446 254

## Description

### Field of the Invention

The present invention relates to an agricultural tractor having an implement linkage, and a system for storage of linkage balls for the implement linkage.

### Background of the Invention

Agricultural tractors are often provided with implement linkages or implement hitches at the front and/or rear of the tractor, the linkages used to mount or attach implements onto the tractor. Such implement linkages, for example a three-point hitch, generally comprise linkage arms arranged to releasably receive linkage balls at free ends of the linkage arms. The linkage balls are provided with through bores to receive implement coupling pins, to allow the implements to be attached to the tractor.

Due to differences in implement size and configuration, a single agricultural tractor may be provided with a plurality of different linkage balls to allow coupling with a variety of implement types. Unused balls may be stored in toolboxes or other storage compartments of the tractor, but this can result in operators misplacing unused balls, or the balls being inconveniently stored relative to the location of the linkage.

Alternative storage solutions have been proposed, such as those shown in European Patent Publications EP1795060 or EP2870844, but such solutions require the use of multi-part mechanical assemblies to retain unused linkage balls. The action of storing a linkage ball in such a system can require the operator to carry out several steps to securely retain a linkage ball in the system, which must be performed in the correct order. In addition, when working in field environments an operator can easily lose parts of such a relatively complicated assembly, rendering the storage solution ineffective. A further example of a mechanical assembly for the storage of linkage balls is described in German patent application DE 24 53 161 A1.

It is an object of the invention to provide an agricultural tractor having a linkage ball storage system which addresses the above issues.

### Summary of the Invention

Accordingly, there is provided an agricultural tractor comprising:
an implement linkage arranged to receive a linkage coupling ball, and
at least one linkage ball for use on such a linkage,
wherein the agricultural tractor is further provided with:
a linkage ball holder at least partly formed from a resiliently deformable material, the linkage ball holder arranged to clasp about a portion of the surface of a linkage ball and hold the linkage ball in place when the linkage ball is not in use on the linkage; wherein the linkage ball holder comprises a tulip-shaped cup element having a base portion and a plurality of fingers depending therefrom, the base portion and the fingers defining an internal space, wherein a linkage ball can be releasably held within the internal space .

A linkage ball holder formed from a resiliently deformable material provides a simple and robust way to store unused linkage balls on a tractor, which does not require a relatively complicated locking and retention mechanism.

Preferably, the resiliently deformable material comprises a rubber or plastics material, or a spring steel material. It may comprise a natural or synthetic rubber, or stamped spring steel.

The linkage ball holder is constructed such that the holder can at least partly deform to allow a linkage ball to be inserted into or removed from the linkage ball holder.

The material is chosen to be flexible enough to allow an operator to insert a linkage ball into the holder without excess effort, while also being resilient enough to retain such a ball within the holder, e.g. during vehicle transport.

A cup element having a plurality of projecting fingers provides a balance between a flexible construction which can be used for easy insertion or removal of a linkage ball, and a reliable structure which acts to securely retain the linkage ball within the holder.

Preferably, at least one of fingers is formed from a resiliently deformable material. Further preferably, all of the fingers are formed from such a material.

Preferably, at least one of the fingers is biased towards the interior of the internal space, such that said at least one finger snugly retains any dimension of linkage ball inserted therein.

As the fingers may be resiliently biased towards the interior of the ball holder, as a result the ball holder may easily retain different dimensions of linkage balls, as the fingers will deform to snugly secure the linkage ball within the interior of the ball holder.

Preferably, the linkage ball holder is arranged to be mounted to a structural frame of the tractor.

Alternatively, the linkage ball holder is arranged to be mounted to a pivot pin of a linkage of the tractor. Preferably, the pivot pin is provided with a bolt hole to which the linkage ball holder can be attached.

Preferably, a bolt hole is provided in a base portion of the linkage ball holder.

Preferably, the linkage ball holder is bolted to a portion of the tractor using a bolt or screw extending through the bolt hole, and received in a corresponding bolt hole in the said portion of the tractor.

In a further aspect, a linkage ball holder as described above is provided as a kit for attachment to an agricultural tractor.

### Detailed Description of the Invention

An embodiment of the invention will now be described, by way of example only, with reference to the accompanying drawings, in which:
Fig. 1 is a side view of an agricultural tractor having a linkage ball holder according to the invention;
Fig. 2 is an enlarged view of a rear implement hitch of the tractor of Fig. 1;
Figs. 3-5 are enlarged views of a portion of the tractor of Fig. 1, illustrating a first embodiment of the linkage ball holder;
Figs. 6-7 are enlarged views of the first embodiment of linkage ball holder; and
Figs. 8-11 show alternative embodiments of the linkage ball holder.

The drawings are provided by way of reference only, and will be acknowledged as not to scale.

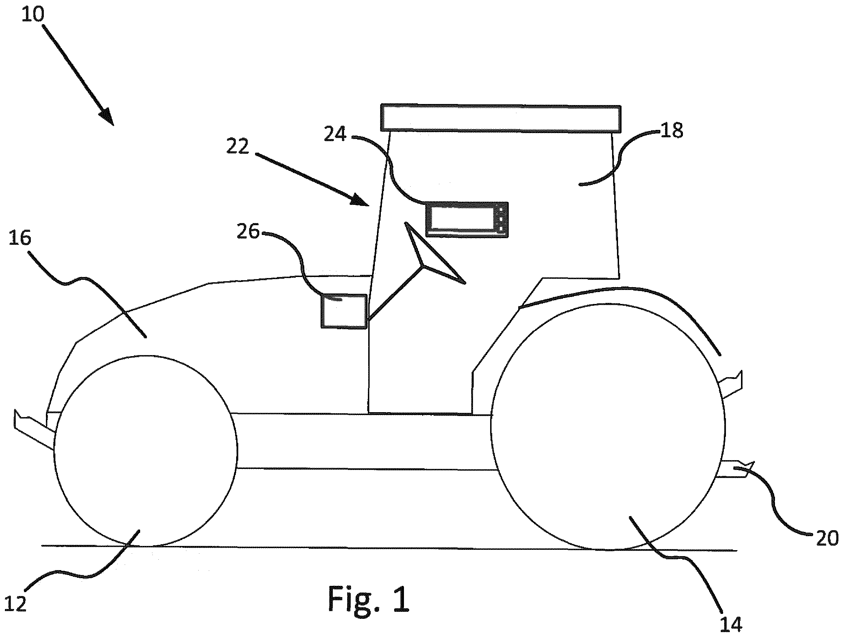

With reference to Fig. 1, an agricultural vehicle according to the invention in the form of an agricultural tractor is indicated at 10. The tractor 10 comprises front wheels 12 and rear wheels 14, a forward engine compartment 16 and a cab section 18. The tractor 10 is provided with a rear three-point linkage partly indicated at 20, which can be used for the mounting of suitable three-point linkage implements to the tractor 10.

Within the cab 18, an operator station 22 is provided, where the operator can access operator controls including an operator terminal 24. The tractor 10 is provided with at least one electronic control unit (ECU) 26. The ECU 26 is configured to interface with the operator controls 24 and with the various systems and sensors provided about the tractor 10, to provide for monitoring and control of tractor operation. The operator controls 24 and ECU 26 allow the operator to actuate different elements of the tractor 10, e.g. hydraulic circuits, lifting systems, HVAC operation, and/or to control the acceleration and steering of the tractor 10.

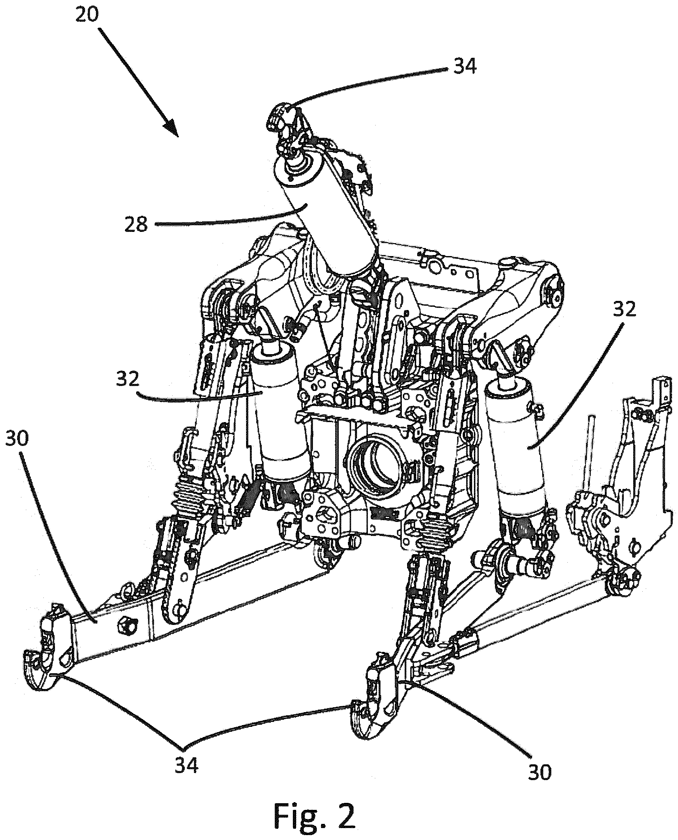

Fig. 2 provides an enlarged view of the rear section of the tractor 10, showing the rear three-point linkage 20 in more detail.

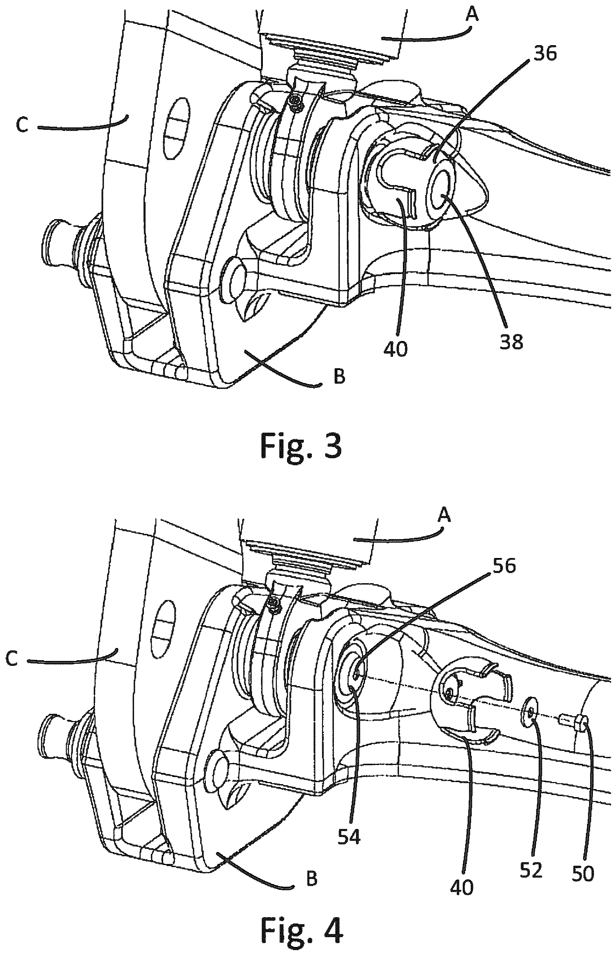

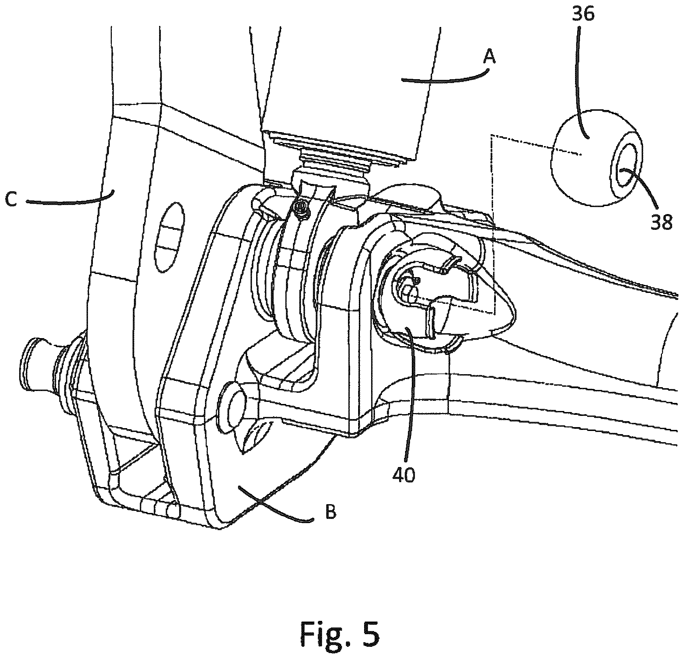

As will be generally understood, the rear three-point linkage 20 comprises a top link 28 and a pair of bottom links 30 arranged as the lift arms of the three-point linkage 20. The bottom lift links 30 can be manipulated using respective lifting cylinders 32. The free ends of the links 28,30 are provided with hook connectors 34 which can connect directly with an implement or which can be arranged to receive a linkage coupling ball. The linkage balls (see 36, Figs. 3 & 5) are provided with through bores 38 to receive implement coupling pins, to allow the implements to be attached to the tractor 10 via the linkage 20. The tractor 10 may be provided with an array of linkage balls 36 of different configurations and dimensions, to allow the coupling of the linkage 20 with different types of implements.

To provide a safe and secure storage location for unused linkage balls 36, the tractor 10 comprises at least one linkage ball holder 40, as shown in Figs. 3-7. The linkage ball holder 40 is configured to releasably hold a linkage ball 36 in place on the tractor 10.

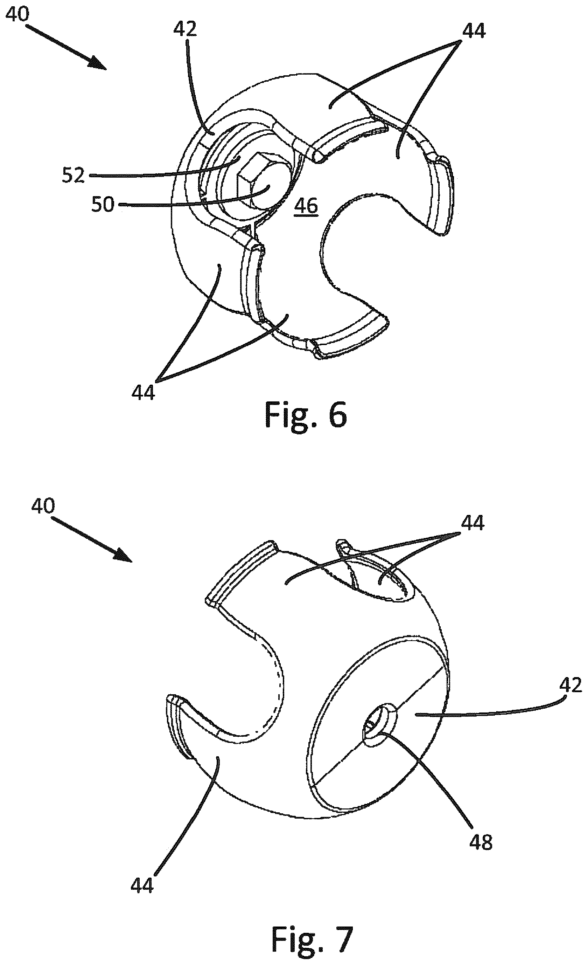

With reference to the enlarged views provided in Figs. 6 and 7, the linkage ball holder 40 of the illustrated embodiment comprises a generally tulip-shaped cup element having a base portion 42 and a plurality of fingers 44 depending therefrom, the base portion 42 and the fingers 44 defining an internal space 46, wherein a linkage ball 36 can be releasably held within the internal space 46. A bolt hole 48 is provided in a base portion 42 of the linkage ball holder 40, allowing the linkage ball holder 40 to be bolted or screwed onto a portion of the tractor 10 using a suitable bolt or screw 50 which can be received in a corresponding aperture on the tractor structure (see Fig. 4). The assembly may be provided with an additional washer element 52 with the bolt or screw 50, as appropriate.

At least a portion of the linkage ball holder 40 is formed from a resiliently deformable material, such that at least a portion of the fingers 44 can deform to allow a linkage ball 36 to be easily inserted into or removed from the internal space 46. The deformable material can include a plastics or rubber material, or a deformable metal, e.g. spring steel. The fingers 44 are arranged to at least partially envelop the internal space 46, such that when a linkage ball 36 is positioned within the internal space 46, the fingers 44 clasp about a portion of the surface of the linkage ball 36 to hold the ball 36 in place. It will be understood that the flexibility of the fingers 44 is selected to allow for the ball 36 to be easily inserted into or removed from the ball holder 40 without considerable effort, while also providing sufficient resilience to retain the ball 36 in place during tractor operations, e.g. during tractor transport.

The linkage ball holder 40 provides a relatively simple, low-cost solution for the storage of unused linkage balls 36 on a tractor 10. In addition, the design of the ball holder 40 means that the holder 40 can be easily located as any position on the tractor 10 having a suitable mounting location.

With reference to Figs. 3-5, the linkage ball holder 40 is illustrated as mounted as part of the rear hitch linkage 20, in particular by mounting to a pivot pin 54 used to couple different linkage components indicated at A, B, and C of Figs. 3-5. The pivot pin 54 is provided with a through bore 56 arranged to receive the bolt or screw 50 to attach the linkage ball holder 40 in place. By mounting the linkage ball holder 40 in the vicinity of the rear hitch linkage 20, accordingly the linkage ball 36 may be easily accessed by a tractor operator when adjusting the associated hitch linkage 20.

The tractor 10 may be provided with an array of linkage ball holders 40 to provide storage for multiple linkage balls 36 on the tractor 10. In addition, it will be understood that the linkage ball holder 40 is preferably dimensioned to accommodate linkage balls 36 of different sizes or categories, e.g. categories 2, 3, and 3-2. In one embodiment, a ball holder 40 is dimensioned to hold category 3 and category 3-2 linkage balls, with a separate ball holder 40 dimensioned to hold category 2 linkage balls. In an alternative embodiment, a single ball holder 40 may be provided wherein the fingers 44 of the ball holder 40 are biased toward the interior of the internal space 46, such that the ball holder 40 will snugly retain any dimension of linkage ball 36 inserted therein.

The linkage ball holder 40 may be provided on a front and/or rear linkage of a tractor 10. The tractor 10 may be provided with separate linkage ball holders 40 for the front and rear hitch linkages of a tractor.

It will be understood that while the embodiment of linkage ball holder 40 illustrated in Figs. 3-7 comprises four fingers 44 arranged to form a tulip-shaped cup element, it will be understood that other constructions of ball holder may be provided, having any number of fingers. In addition, it will be understood that the entire linkage ball holder 40 may be formed from the resiliently deformable material, or only a portion of the ball holder 40, e.g. only the fingers 44, is formed from such a material.

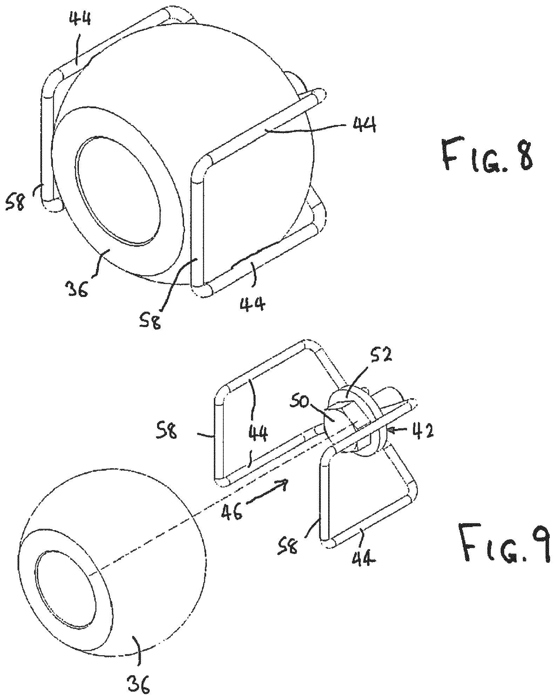

Figs. 8-9 show a first alternative embodiment of the linkage ball holder 40 in which each of the four fingers 44 is in the form of a resilient tine of e.g. sprung steel radially spaced about, and extending forwardly from, the base 42, with respective pairs of tines being joined at their distal ends by a cross member 58 of the same material. The fingers or tines 44 and cross members 58 thereby provide two spaced apart loops of resilient material defining the internal space 46 therebetween.

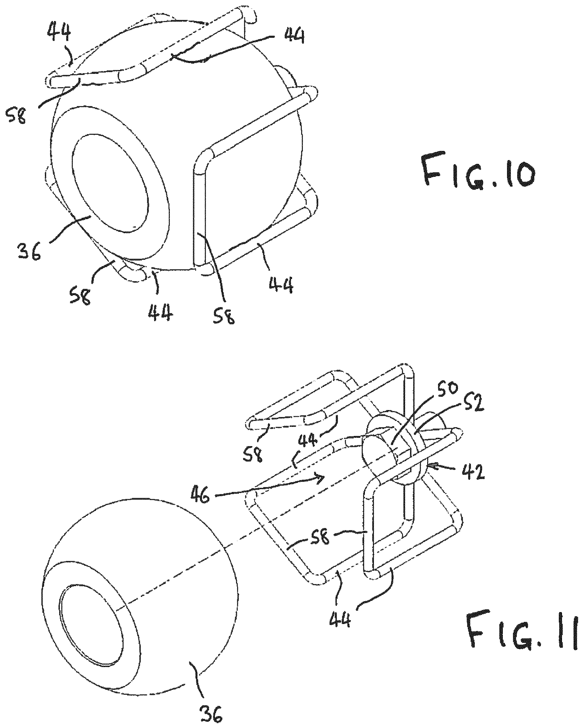

Figures 10-11 show a further alternative embodiment of the linkage ball holder 40. It is substantially the same as the embodiment of Figs. 8-9 but has six fingers 44 (and three cross members 58) providing three spaced apart loops of resilient material defining the internal space 46 therebetween.

It will further be understood that the linkage ball holder 40 may be provided as a kit for installation or retrofitting to an existing tractor 10. The ball holder 40 may be provided along with a suitable screw or bolt 50, washer 52, and/or pivot pin 54 having receiving bore 56.

As a result of providing a tractor with a linkage ball holder which is resiliently deformable to allow easy retention of unused linkage balls, the tractor operator can easily and reliably store such balls without the need for multi-step storage operations or additional locking components which may be displaced. In addition, the simplicity of construction of the linkage ball holder allows for the holder to be located at any suitable position on the tractor, providing for greater flexibility of use of the linkage ball holder system.

## Claims

1. An agricultural tractor (10) comprising:
an implement linkage (20) arranged to receive a linkage coupling ball, and
at least one linkage ball (36) for use on such a linkage,
wherein the agricultural tractor is further provided with:
at least one linkage ball holder (40) at least partly formed from a resiliently deformable material, the linkage ball holder arranged to clasp about a portion of the surface of a linkage ball (36) and hold the linkage ball in place when the linkage ball is not in use on the linkage (20);
**characterised in that** the linkage ball holder (40) comprises a tulip-shaped cup element having a base portion (42) and a plurality of fingers (44) depending therefrom, the base portion (42) and the fingers (44) defining an internal space (46), wherein a linkage ball (36) can be releasably held within the internal space.

2. The tractor of claim 1, wherein the resiliently deformable material comprises a rubber or plastics material or spring steel.

3. The tractor of claim 1 or claim 2, wherein the linkage ball holder (40) is constructed such that the holder can at least partly deform to allow a linkage ball (36) to be inserted into or removed from the linkage ball holder.

4. The tractor of claim 1, wherein at least one of fingers (44) is formed from a resiliently deformable material.

5. The tractor of claim 1 or claim 4, wherein at least one of the fingers (44) is biased towards the interior of the internal space (46), such that said at least one finger (44) snugly retains any dimension of linkage ball (36) inserted therein.

6. The tractor of any one of claims 1 to 5, wherein the linkage ball holder (40) is arranged to be mounted to a structural frame of the tractor (10).

7. The tractor of any one of claims 1 to 5, wherein the linkage ball holder (40) is arranged to be mounted to a pivot pin of a linkage (20) of the tractor (10).

8. The tractor of any one of claims 1 to 7, wherein a bolt hole (48) is provided in a base portion (42) of the linkage ball holder (40).

9. The tractor of claim 8, wherein the linkage ball holder (40) is bolted to a portion of the tractor (10) using a bolt or screw (50) extending through the bolt hole (48), and received in a corresponding bolt hole in the said portion of the tractor.

10. A linkage ball holder (40) as described in any one of claims 1 to 9 provided as a kit for attachment to an agricultural tractor (10).

## Patentansprüche

1. Landwirtschaftlicher Traktor (10), mit:
einer Arbeitsgerätanbindung (20), die zum Aufnehmen einer Anbindungs-Kupplungskugel angeordnet ist, und
mindestens einer Anbindungskugel (36) zur Verwendung an einer solchen Anbindung, wobei der landwirtschaftliche Traktor weiterhin mit dem Folgenden versehen ist:
mindestens einem Anbindungskugelhalter (40), der zumindest teilweise aus einem nachgiebig deformierbaren Material gebildet ist, wobei der Anbindungskugelhalter angeordnet ist, um einen Bereich der Oberfläche einer Anbindungskugel (36) zu umfassen und die Anbindungskugel in dieser Stellung zu halten, wenn die Anbindungskugel nicht an der Anbindung (20) benutzt wird;
**dadurch gekennzeichnet, dass** der Anbindungskugelhalter (40) ein tulpenförmiges Becherelement mit einem Basisbereich (42) und einer Mehrzahl von davon abgehenden Fingern (44) aufweist, wobei der Basisbereich (42) und die Finger (44) einen Innenraum (46) definieren, wobei eine Anbindungskugel (36) lösbar in dem Innenraum (46) gehalten werden kann.

2. Traktor nach Anspruch 1, wobei das nachgiebig deformierbare Material ein Gummimaterial, ein Plastikmaterial oder Federstahl aufweist.

3. Traktor nach Anspruch 1 oder 2, wobei der Anbindungskugelhalter (40) so konstruiert ist, dass der Halter zumindest teilweise deformierbar ist, um es einer Anbindungskugel (36) zu ermöglichen, in den Anbindungskugelhalter eingesetzt oder aus diesem entfernt zu werden.

4. Traktor nach Anspruch 1, wobei mindestens einer der Finger (44) aus einem nachgiebig deformierbaren Material gebildet ist.

5. Traktor nach Anspruch 1 oder 4, wobei mindestens einer der Finger (44) in Richtung des Inneren des Innenraums (46) beaufschlagt ist, sodass der mindestens eine Finger (44) eine eingesetzte Anbindungskugel (36) beliebiger Abmaße passgenau aufnimmt.

6. Traktor nach mindestens einem der Ansprüche 1 bis 5, wobei der Anbindungskugelhalter (40) ausgebildet ist, um an einem Strukturrahmen des Traktors (10) montiert zu werden.

7. Traktor nach mindestens einem der Ansprüche 1 bis 5, wobei der Anbindungskugelhalter (40) ausgebildet ist, um an einem Schwenkzapfen einer Anbindung (20) des Traktors (10) montiert zu werden.

8. Traktor nach mindestens einem der Ansprüche 1 bis 7, wobei eine Zapfenbohrung (48) in einem Basisbereich (42) des Anbindungskugelhalters (40) vorgesehen ist.

9. Traktor nach Anspruch 8, wobei der Anbindungskugelhalter (40) unter Verwendung eines Bolzens oder einer Schraube (50), der/die sich durch die Bolzenbohrung (48) erstreckt, mit einem Bereich des Traktors (10) verschraubt und in einer korrespondierenden Bolzenbohrung in dem Bereich des Traktors aufgenommen ist.

10. Anbindungskugelhalter (40) nach mindestens einem der Ansprüche 1 bis 9, der als Ausrüstung für eine Befestigung an einem landwirtschaftlichen Traktor (10) bereitgestellt ist.

## Revendications

1. Tracteur agricole (10) comprenant :
un attelage d'outillage (20) agencé afin de recevoir une boule de couplage d'attelage, et
au moins une boule d'attelage (36) destinée à une utilisation sur un tel attelage, dans lequel le tracteur agricole comporte, en outre :
au moins un support de boule d'attelage (40) formé au moins partiellement en un matériau déformable de manière élastique, le support de boule d'attelage étant agencé afin de s'enrouler autour d'une partie de la surface d'une boule d'attelage (36) et de maintenir la boule d'attelage en place lorsque la boule d'attelage n'est pas utilisée sur l'attelage (20) ;
**caractérisé en ce que** le support de boule d'attelage (40) comprend un élément en coupelle en forme de tulipe présentant une partie de base (42) et une pluralité de doigts (44) dépendant de celle-ci, la partie de base (42) et les doigts (44) définissant un espace interne (46), dans lequel une boule d'attelage (36) peut être maintenue de manière amovible à l'intérieur de l'espace interne.

2. Tracteur selon la revendication 1, dans lequel le matériau déformable de manière élastique comprend un caoutchouc ou une matière plastique ou un acier élastique.

3. Tracteur selon la revendication 1 ou 2, dans lequel le support de boule d'attelage (40) est construit de telle sorte que le support peut, au moins en partie, être déformé afin de permettre l'insertion d'une boule d'attelage (36) dans le support de boule d'attelage ou le retrait de celle-ci.

4. Tracteur selon la revendication 1, dans lequel au moins l'un des doigts (44) est formé en un matériau pouvant être déformé de manière élastique.

5. Tracteur selon la revendication 1 ou 4, dans lequel au moins l'un des doigts (44) est préchargé vers l'intérieur de l'espace interne (46), de telle sorte que ledit au moins un doigt (44) conserve parfaitement une dimension de boule d'attelage (36) insérée à l'intérieur.

6. Tracteur selon l'une quelconque des revendications 1 à 5, dans lequel le support de boule d'attelage (40) est agencé de manière à être monté sur un châssis structurel du tracteur (10).

7. Tracteur selon l'une quelconque des revendications 1 à 5, dans lequel le support de boule d'attelage (40) est agencé de manière à être monté sur une broche pivot d'un attelage (20) du tracteur (10).

8. Tracteur selon l'une quelconque des revendications 1 à 7, dans lequel un orifice de vis (48) est formé sur une partie de base (42) du support de boule d'attelage (40).

9. Tracteur selon la revendication 8, dans lequel le support de boule d'attelage (40) est boulonné sur une partie du tracteur (10) en utilisant un boulon ou une vis (50) s'étendant à travers l'orifice de boulon (48), et reçu dans un orifice de boulon correspondant sur ladite partie du tracteur.

10. Support de boule d'attelage (40) selon l'une quelconque des revendications 1 à 9, agencé sous forme d'un kit à fixer sur un tracteur agricole (10).
